# EUROPEAN PATENT SPECIFICATION

(11) **EP 2 375 803 B1**
(45) Date of publication and mention of the grant of the patent: **28.12.2016**
(21) Application number: 11275054.2
(22) Date of filing: 29.03.2011
(51) Int. Cl.: H04W 24/02, H04W 88/10, H04W 88/12, H04W 92/12

(54) **Multi-mode Radio Access Network controller entity with dynamic re-configuration for supporting at least two different radio access technologies**
Multi-mode Steuerungseinheit für ein Funkzugriffsnetzwerk mit dynamischer Rekonfiguration zur Unterstützung von zumindest zwei unterschiedlichen Funkkzugriffstechnologien
Entité de contrôleur de réseau d'accès radio multi-mode avec reconfiguration dynamique pour soutenir au moins deux technologies d'acces radio différentes

(30) Priority: 29.03.2010 ES 201030465; 27.08.2010 GB 201014315
(43) Date of publication of application: 12.10.2011
(73) Proprietor: Vodafone Group plc, Newbury, Berkshire RG14 2FN (GB); Vodafone España, S.A.U., 28108 Alcobendas (ES)
(72) Inventor: Dominguez Romero, Francisco, E-28050, Madrid (ES); De Pasquale, Andrea, E-28050, Madrid (ES); Urbano Ruiz, Julio, E-28050, Madrid (ES); Valerdi Rodriguez, David, E-28050, Madrid (ES); Gomez Coloma, Alberto, E-28050, Madrid (ES)
(74) Representative: Boult Wade Tennant

(56) References cited:
- EP-A1- 2 094 024
- US-A1- 2007 263 636
- US-A1- 2009 227 262

## Description

### Field of the Invention

The present invention relates to the field of mobile telecommunications networks. More specifically, it relates to a single controller entity capable of managing different radio access technologies (RATs). Amongst other network technologies, the present invention is particularly focused on a controller entity with BSC and RNC functionalities, thereby supporting both 2G (GSM) and 3G (UMTS) mobile networks.

### Background of the Invention

In many mobile telecommunication network deployments more than one radio access technology is available simultaneously. As a result, terminals for use in these networks are usually specified to operate within the different existing radio access networks (RANs).

Other network elements such as the BSC, the RNC, the Base Stations (BTS in 2G or Node B in 3G) are typically dedicated to supporting a sole RAT. It would be particularly advantageous that the entity in charge of implementing the radio access technology for a first network also serves for a second network when both networks may coexist. That is to say, a single, common entity supports two or more radio access technologies by sharing functions and elements needed by each network.

It is known to provide a network controller working on several networks. US patent application US2002086667, for instance, relates to a transmission and interconnection method focused on the lu interface applied to GSM. This facilitates the sharing of a single board for transmission.

US patent application US2004082366 relates to a radio server for interworking between networks (specifically between BSC of a 2G network and RNC of a 3G network). The disclosed radio server performs several tasks associated with Common Radio Resource Management (Co-RRM).

International patent application WO02098154 relates to a method for connecting a BSC through an RNC supporting the lu interface with the Core Network. The method described relates solely to transmission focused on the lu interface.

EP-2094024 relates to a multimode communication system. A multimode base station, which supports multi radio access technologies can share some physical resources between the network elements of the different radio access technologies. The resources allocated to the base stations for the different radio access technologies may be adjusted dynamically, for example by reducing the carrier or transmission resources allocated, based on the number of users accessing the network using the different radio access technologies.

### Summary of the invention

The present invention proposes to merge two different radio network access in a unique element doing both functions simultaneously.

In accordance with a first aspect of the invention there is provided a controller entity for managing base stations of at least a first radio access technology and a second radio access technology comprising:
a common transmission interface unit for transmitting to/receiving from a base station of the first radio access technology and a base station of the second radio access technology;
a plurality of hardware module units, each of which has an operation mode that selectively configures the respective hardware module unit for dedication to one or both of the first and the second radio access technologies; and
an assignment module for establishing the operation mode that defines a dedication configuration of at least one of the hardware module units in dependence upon a measurement of the performance and the reliability of said hardware module units for each of the radio access technologies.

In accordance with a further aspect of the invention is provided a method of re-configuring the usage of hardware module units of a controller entity for managing base stations of at least a first radio access technology and a second radio access technology, the method comprising the following steps:
measuring the performance and the reliability of the hardware module units for the first and for the second Radio Access Technologies;
identifying at least one of the hardware module units as targets to be reconfigured; and
re-configuring, upon dependence of the measurement of the performance and the reliability, the usage of the identified at least one hardware module unit by assigning its dedication to one or both of the first and second Radio Access Technologies in order to enable both Radio Access Technologies to share resources.

Accordingly, the present invention provides a single element capable of controlling the access to a plurality of radio access networks, each of said radio access networks having a corresponding set of technical characteristics. This is achieved by merging a first and a second network technology in a single entity capable of handling functions pertaining to both technologies.

Throughout this document, such single element will be referred to, without implied loss of generality, as a Single RAN controller (4) and more specifically as a Single RAN BSC/RNC.

By merging RAN entities for at least a first and a second radio access network within a single, common element, this "single RAN controller" simultaneously performs functions of each radio access technology. This goes beyond a mere aggregation of units pertaining to different technologies within one element because the single RAN controller is synergistically coupled with both technologies. The logical units pertaining to different networks interact with each other on different levels. As a result, some elements may be shared, and some may even be switched off or on, depending whether certain conditions are met.

The invention radically differs from the known, partial solutions mentioned above. In essence the single RAN controller is not merely a "box" with two types of elements inside, it is rather a network entity that dynamically assigns hardware and software capacity to provide network functionality in support of two or more different RATs. In some cases the network functionality is provided by common functions (i.e. functions shared between more than one of the supported RATs) and yields a gain in terms of processing power or Radio algorithms in order to increase the network efficiency.

The invention also enables an additional functionality for transferring traffic between technologies. This new function, implemented in the Single RAN controller, allows the assignment of multi-mode terminals to a given radio access technology (RAT) with a RAT selection, for instance, dependent on the load of each network.

The present invention thus provides a solution to problems caused by congestion in one of the radio access networks by defining an algorithm for triggering terminal handover between radio access networks, each RAN having a corresponding RAT. The implementation of the algorithm takes place in the single RAN controller as part of its functions and also considers terminals features for supporting a particular network technology.

Similarly, the present invention addresses network failures caused by faults in equipment associated with one of the networks and therefore avoiding calls being dropped. These failures may be overcome, or at least mitigated, by changing the operation mode of the working equipment dedicated to the other network to allow said equipment and its resources to be shared by both networks simultaneously.

### Brief description of the drawings

The above and other objects and features of the invention will appear clearer with the following accompanying drawings, given as non-restrictive examples.
FIG. 1 shows a diagram regarding prior art network architecture, having BSC, RNC and different base stations for 2G and 3G.
FIG. 2 shows a diagram of a network architecture according to the present invention.
FIG. 3 shows a flow diagram when the load of the RAT-A exceeds a defined threshold regarding a congestion state (10), then it is checked the processing load of the other RAT-B in order to redistribute resources. If the load of the RAT-B is under a green state (11) indicating a capacity of handling current load with less resources without significant loss of performance, thus some resources can be reconfigured (12) thereby switching their dedication from RAT-B to RAT-A. Alternatively, it must act a pre-emption mechanism (13) currently available in RAT controllers.
FIG. 4 shows the detailed single RAN concept in which the single RAN controller in accordance with the invention may be deployed as an evolution of prior GSM and UMTS controller.

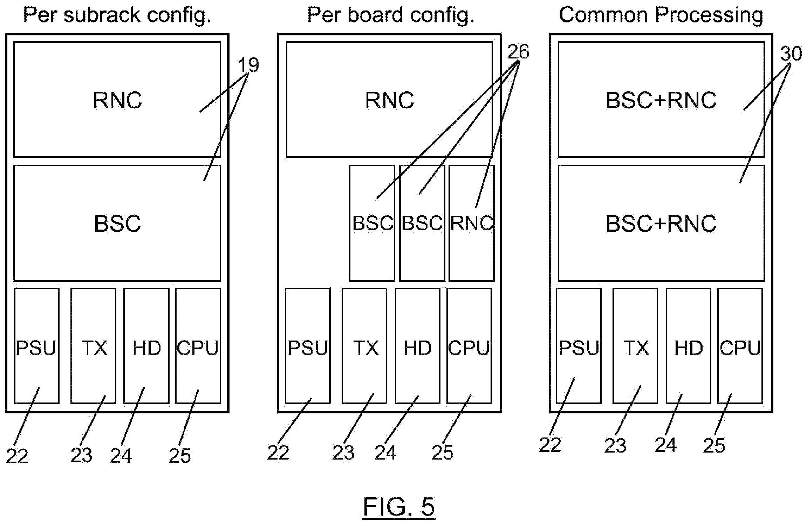

FIG. 5 shows different levels of granularity in the hardware implementation. It can be dedicated processing hardware capabilities to every technology per sub-rack, per board or it can be a common processing for all technologies.
FIG. 6 shows an example of a dynamic configuration by reassessing resources.

### Detailed description of a preferential embodiment

At present, there are two main different radio access technologies deployed in tandem in many parts of the world, namely GSM (or 2G) and UMTS (or 3G). Each one has its own controller governing the access to the network, this entity is responsible for the radio resource management. In GSM, this controller is called BSC (2), Base Station Controller, while in UMTS it is called RNC (3), Radio Network Controller.

Unfortunately, these entities are not compatible.

Despite the fact that GSM mobile operators have also deployed UMTS in their networks, the incompatibility still remains. As a consequence, each network needs to be separately configured based on traffic requirements in that network alone.

The majority of GSM and UMTS sites (i.e. sites where GSM and UMTS hardware is installed) are shared. While there is typically no issue of proximity, the problem is that a distinct transmission system is needed for each technology, so each part - GSM transmission and UMTS transmission - has to be dimensioned independently. The size of the GSM subsystem has to be calculated based on the GSM cell traffic, and likewise the UMTS subsystem has to be based on the UMTS traffic. It would thus be advantageous to integrate both subsystems within the same entity. This approach would make it possible to have common Hardware for both technologies by sharing components. It is also possible to dedicate resources and redistribute terminals to a first or a second network (for instance GSM and UMTS) depending on the load experienced in a certain moment.

Throughout this document, the entity integrating GSM and UMTS subsystems will be referred to as single RAN BSC/RNC (4), which is a common Controller for the GSM and UMTS Base Stations.

According to the invention, there are different levels of common functions, which are described herein below.

### Common transmission (23).

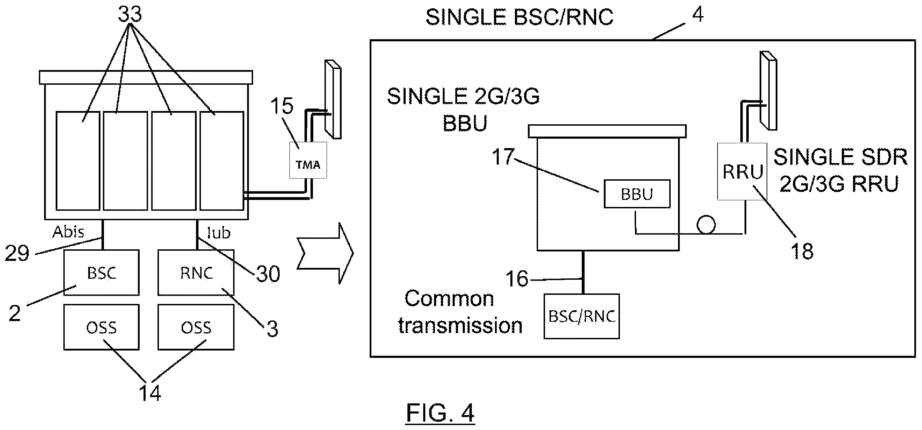

As seen in figure 4, the BSC and the RNC perform similar functions in 2G and 3G networks respectively.

The interface between the BSC (2) and the BTS in GSM is called Abis (29).

The interface between the RNC (3) and the Node B in UMTS is called lub (30).By means of a common lub/Abis (16) interface implementation in a module allows different options of commonality in the single RAN controller (4).

The single RAN BSC/RNC (4) is configured to carry 2G or 3G traffic under a common pool bandwidth. The traffic may be allocated regardless the technology by means of the common lub/Abis interface (16). This is detailed in co-pending European patent application EP2144477. This document discloses a shared Call Admission Control and a shared Control Congestion that are implemented in the RNC/BSC side and in the NodeB/BTS side.

Other components, as illustrated in figure 4, can also be substituted. Remote radio heads (33) (i.e. GSM 900, GSM 1800, UMTS 2100 y UMTS 900) to operate on GSM and on UMTS in different frequency bands using Abis (29) and lub (30) respectively, are replaced with a single 2G/3G base band unit (17) and prior tower mounted amplifiers (15) are replaced with a radio remote unit (18).

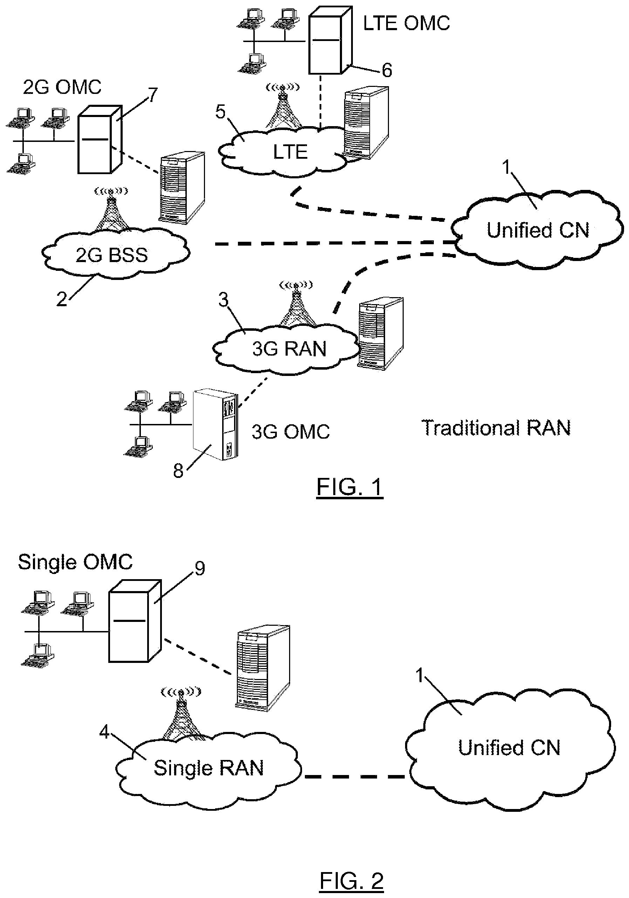

GSM mobile operators have also deployed UMTS in their networks. A big part of the GSM and UMTS sites are currently being grouped together (as shown in figure 1A). The problem is that a distinct transmission system is needed for each technology, so each part -GSM transmission 1 and UTMS transmission 2- has to be dimensioned independently, i.e. the size of the GSM partition has to be calculated based on the GSM cell traffic,. and the UMTS partition has to be based on the UMTS traffic, as they are different links.

### Common Operation and Maintenance and Alarm system.

The Single RAN BSC/RNC is controlled by the same OSS (14). OSS stands for Operation Support System, a set of routines implemented for managing certain tasks:
- Configuration Management that allows the configuration and monitoring of the elements, and parameters.
- Fault Management that includes the alarm system for fault detection and error handling.
- Performance Management that carries out performance monitoring measurements such as the processor load of the Single RAN BSC/RNC boards (% of the total power processing of the board which is being used in a moment), the common transmission interface occupation, the total amount of traffic, etc. These are common for both technologies, so that the common OSS (14) will be doing this task apart from any other task dedicated to every technology.

▪ Security management in charge of the secure access to the OSS (14) common system.

The Common OSS (14) also handles the administration of all the network elements (2G BTSs, 3G BTSs or Single RAN BTSs) connected to the Single RAN BSC/RNC and improves the reliability of the system.

### Common power supply unit (22)

That is the use of the same hardware for power supply for both systems simultaneously to save total power consumption.

### Common central processor unit (25) and storing system (24)

In every controller there are Central Processor Units (CPU) that control the whole system by itself or one per sub-rack/shelf equipment. In the case of the Single RAN BSC/RNC (4), there is also a Common CPU (25), but it also has additional functions, it supervises tasks, assigns resources as well as controls both systems at the same time. By means of the OSS routines, resources can be managed at several levels. In particular, this Common CPU (25) comprises an assignment module which decides the operation modes in order to switch HW components dedication from an exclusive radio access technology to another or also to the mixed mode.

Throughout the present invention the terms "sub-rack", or simply "shelf", denote a subrack mountable equipment (19). The size of the frame for mounting multiple equipments (usually in a server) may be 19 or 22 inches.

In the same way, the possible storing systems (24) (e.g. hard disks, solid state memory, etc.) can be shared between GSM and UMTS systems.

### Operation Mode associated with Software Defined Radio (SDR) for the Hardware:

According to Software Defined Radio (SDR) approach, components that used to be previously implemented in hardware can now be implemented using software on computing devices. This allows several Operation Modes to be defined in connection with the degree to which HW components may be separated and combined.

Basically, the present invention proposes two different levels of functions: subrack or board/card level.
▪ Each subrack (19) can work in the three modes available: RNC dedicated subrack, BSC dedicated subrack and RNC+BSC subrack.
▪ Each board (26) can work in the three modes available: RNC dedicated board, BSC dedicated board and RNC+BSC board.
This subdivision is handled by different software under the same hardware. Normally in the per subrack mode, the software of the complete subrack is dedicated to one technology including hard disk, processing power or control units. In each board mode, every board of processing has software dedicated to one technology and there are common tasks as hard disk or control functions performed by a common software for both technologies. Through the OSS, it is possible to configure every subrack or board with one of the modes as it is just a change of the software running in the equipment. By configuring the mixed mode in the RNC+BSC board, it is necessary a new software capable of processing both technologies protocols and message processing simultaneously.

The SDR concept allows modularity when upgrading from BSC to RNC, from RNC to BSC, from BSC to RNC/BSC & from RNC to RNC/BSC just by SW at board level.

As a consequence, HW upgrade may be avoided and the need for upgrading components is limited to certain situations. For instance, in order to re-assess capacity, the RAN may require extra cards to be added.

### Common or dedicated processing boards for 2G and 3G.

Mobile Networks processing boards are defined as the boards dedicated to process the GSM or UMTS protocol stack, algorithms of mobility, encryption, data delivering, data routing, and all the functions specified for the BSC and RNC in the 3GPP.

The steps for the commonality of these boards are:
▪ GSM or UMTS functions definition at sub-rack level. Every subrack (19) will be dedicated to RNC or to BSC according to the operator necessity by software parameterisation.
▪ GSM or UMTS functions definition at board level. Every board (26) will be dedicated to RNC or BSC according to the operator necessity by software parameterisation.
▪ GSM and UMTS functions done in the same board.
For the first and the second cases: boards dedicated to UMTS or GSM, this invention defines advanced algorithm, which will be included in the equipment control boards to configure every processing board based on the traffic load. The common Control boards are also dedicated to manage the equipment, perform the OSS interface, and report alarms to the Operation and Maintenance systems.

All the boards dedicated to one RAT (Radio Access Technology) will be working in pool mode, which is currently implemented in RAN controller (i.e RNC or BSC). That means there are some balancing mechanisms to share the processing power dynamically between the boards of the same RAT. Once balancing mechanisms are applied, the board (or subrack) is capable of dynamically adjusting its amount of resources dedicated to one radio access technology instead of the other.

When the load in one RAT (RAT-A) is very high then some board(s) or subracks/shelfs of the RAT-B will be configured to RAT-A in order to cope with the load.

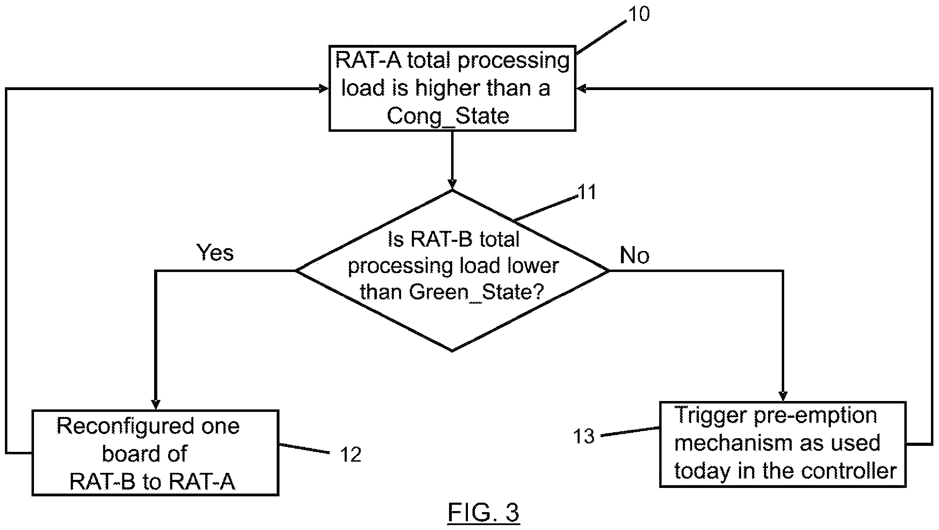

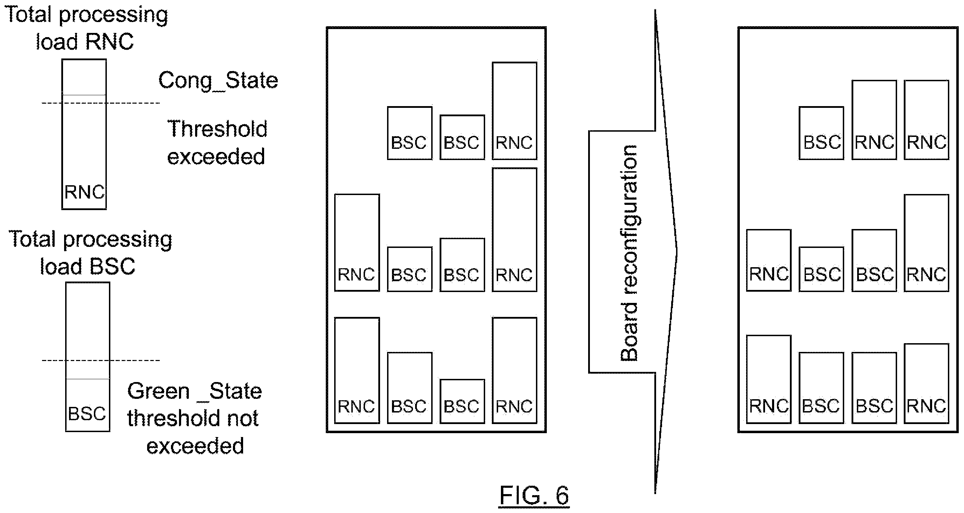

There may be many algorithms for carrying out the balance of load between networks. In this respect, an example of flow diagram is given in Figure 3. It shows when the load of the RAT-A exceeds a (congestion) threshold referred to in the figure 3 as congestion state (10), then the total processing load in RAT-B is checked in order to verify that a unit dedicated to the other RAT is under the threshold (which can be called Green State (11)), which refers to the capability for taking on additional load. In Figure 6, it is shown a practical example of one board reconfiguration after checking the load of the boards of both Radio Access Technologies as indicated in diagram of figure 3. Accordingly, this reconfiguration is performed by dynamically reassessing resources in dependence upon the two thresholds.

At first, 3G boards are overloaded (congestion state (10)), while 2G boards remain underused (in green state (11)); then a reconfiguration is performed to distribute resources properly by switching board dedication from 2G to 3G. Obviously, the reconfiguration acts in a similar way when the overloaded boards are those pertaining to 2G. When the conditions for the reconfiguration process are not met, the congestion mechanism of every technology will act.

### CoRRM

In a multi-cell network telecommunication, Radio Resource Management (RRM) involves strategies for controlling parameters such as transmit power, channel allocation, handover criteria, modulation scheme, error coding scheme. The RRM concept is extended to the two networks for implementing a general and unified management considering cells and terminals pertaining to each technology network.

The Common Controller has the possibility to know in details the cell load of both 2G and 3G Base Stations under its control, and this load will be stored in internal memory elements, accessible to all the units performing RRM decisions either in 3G or 2G. For this reason any inter-RAT hard handover between UMTS and GSM algorithm will now check the load of the target system before taking the final decision for a handover execution. Then, the handover can be made towards a cell with an acceptable load, ensuring the successful procedure. Apart from the load, it can be taken also into account the type of traffic (voice, video-call, data) and the quality of service associated to the call (i.e. the priority of the call).

In this connection, despite of the increasing of multimedia data services, the voice is still considered the most important service offered by telecommunication operators. To reflect this and prevent drop calls, CS traffic is of higher importance than PS traffic. This categorization is especially advantageous in a congestion scenario. It allows the functionality of re-arrangement resources in order to cope with voice traffic needs in GSM and in UMTS as well.

By prioritising CS voice over PS, in the event of CS traffic being close to an overload state, the resources that are assigned to PS can be released and dedicated, upon reconfiguration, to CS traffic. What is more, this is performed whether or not, the traffic is of the 2G or 3G type for components are capable of working in GSM and UMTS mode selectively.

This can be done using the TC to identify whether it is a Conversational call (voice call) or Streaming, interactive, background (Packet calls). It is also possible to distinguish between Streaming and the rest of the packet calls, using this differentiation to reconfigure the Hardware for GSM-UMTS to prioritise the streaming calls.

A single controller, as depicted by the present document, can implement this priority management in many levels and components. For instance, among other, it may be applicable to signalling, transmission interfaces and transcoders.

Besides, this solution may be also applied in case of failure of a particular module and therefore it permits to mitigate a loss of capacity in this service.

The same technique can be applied to a service level. If one service is identified as high priority, the same algorithm can be used. Service level can be identified as the "Traffic Class" or ARP (Allocation Retention Priority) and THP (Traffic Handling Priority) attributes. These are two attributes defined to have different priorities for different packet sessions.

On account of this, a user preference regulation may be established in the telecommunication network may be organised. For example, there may be "gold" users and to avoid congestion of the gold users/services (THP/ARP is set to high priority values), it is thus possible to reallocate resources used by low priority services to avoid congestion for gold services/users.

### Example:

Considering the following situation, there is a crowded stadium with a lot of 3G calls, then the load of the 3G radio cells is really high and it is necessary to perform inter-RAT handover towards GSM. In GSM there are different cells available, and then the Single RAN BSC/RNC will check internally which one is the less loaded cell. Then the Single RAN BSC/RNC orders the inter-RAT handover to the UE towards the chosen cell.

### Advantages:

- It grants large scale Network simplification.
- It allows cost effective migration towards a future proof 2G/3G capable Network.
- It facilitates smooth introduction of UMTS900 technology.
- It obtains flexibility of operation and adaptation to the client necessities by developing Software Defined Radio.
- It enables refreshment of the legacy 2G Network or roll-out a new 2G energy efficient Network.
- It permits saving of energy of up to 80% per site.
- It prevents congestion of certain services by reallocating resources previously dedicated to low priority services.

### Glossary:

It is well-known that abbreviations and acronyms are frequently used in the mobile telephony field. Below there is a list of acronyms/terms used throughout the present specification:
- ARP: Allocation Retention Priority
- BBU: Base Band Unit
- BSC: Base Station Controller
- BTS: Base Transceiver Station
- 3GPP: Third Generation Partnership Project
- GSM: Global System for Mobile communications
- HW: Hardware
- LTE: Long Term Evolution
- OMC: Operations and Maintenance Centre
- OSS: Operation Support System
- RAN: Radio Access Network
- RAT: Radio Access Technology
- RNC: Remote Network Controller
- RRM: Radio Resource Management
- RRU: Radio Remote Unit
- SDR: Software Defined Radio
- SW: Software
- TMA: Tower Mounted Amplifier
- TC: Traffic Class
- THP: Traffic Handling Priority
- UE: User Equipment
- UMTS: Universal Mobile Telecommunications System
- UTRAN: UMTS Terrestrial Radio Access Network

**Reference signs list**

| | |
|---|---|
| Unified Core Network (1); | Single base band unit (17); |
| BSC (2); | Radio remote unit (18); |
| RNC (3); | Generic subrack (19); |
| Single RAN controller (4); | Common power supply unit (22); |
| LTE access network controller (5); | Common transmission board (23); |
| LTE OMC (6); | Common storing system (24); |
| 2G OMC (7); | Common central processor unit (25); |
| 3G OMC (8); | Generic board (26); |
| Single OMC (9); | Abis (29); |
| Congestion state (10); | lub (30); |
| Green state (11); | Remote radio heads (33); |
| Reconfiguration mechanism (12); | |
| Pre-emption mechanism (13); | |
| OSS (14); | |
| Tower mounted amplifiers (15); | |
| Common lub/Abis interface (16); | |

## Claims

1. A controller entity (4) for managing base stations of at least a first radio access technology and a second radio access technology comprising:
a common transmission interface unit for transmitting to/receiving from a base station of the first radio access technology and a base station of the second radio access technology;
a plurality of hardware module units, each of which has an operation mode that selectively configures the respective hardware module unit for dedication to one or both of the first and the second radio access technologies; and
an assignment module for establishing the operation mode that defines a dedication configuration of at least one of the hardware module units in dependence upon a measurement of the performance and the reliability of said hardware module units for each of the radio access technologies.

2. A controller entity according to claim 1, **characterised in that** the operation mode of hardware module units is selected among the following:
exclusive dedication to the first Radio Access Technology;
exclusive dedication to the second Radio Access Technology; and
simultaneous dedication to the first and second Radio Access Technologies.

3. A controller entity according to claim 1 or 2, wherein the operation mode of hardware module units is established in dependence upon the load and the type of traffic managed by each radio access technology in order to prioritise a first type of traffic over a second type of traffic.

4. A controller entity according to claim 3, wherein the different types of traffic are defined in dependence upon at least one of the following parameters:
Traffic Class;
Allocation Retention Priority (ARP);and
Traffic Handling Priority (THP).

5. A controller entity according to any of previous claims, **characterised in that** at least one hardware module unit is a subrack-mountable equipment of a server.

6. A controller entity according to any of previous claims, **characterised in that** at least one hardware module unit is a board for being inserted in a subrack mountable equipment of a server.

7. A controller entity according to any of previous claims, further comprising a common Radio Resource Management module for performing inter-Radio Access Technology handover based on the load of each Radio Access Technology and the measurement of the performance and the reliability of hardware module units.

8. A controller entity according to any of previous claims, further comprising a common Operation Support System (14) for monitoring and configuring parameters, managing performance measurements detecting faults and producing alarms for a first and a second Radio Access Technology.

9. Method of re-configuring the usage of hardware module units of a controller entity (4) for managing base stations of at least a first radio access technology and a second radio access technology, the method comprising the following steps:
measuring the performance and the reliability of the hardware module units for the first and for the second Radio Access Technologies;
identifying at least one of the hardware module units as targets to be reconfigured; and
re-configuring, upon dependence of the measurement of the performance and the reliability, the usage of the identified at least one hardware module unit by assigning its dedication to one or both of the first and second Radio Access Technologies in order to enable both Radio Access Technologies to share resources.

10. Method of re-configuring the usage of hardware module units of a controller entity according to claim 9, wherein the measuring of performance and reliability further comprises:
evaluating, for each radio access technology and for each hardware module units, the type and the load of traffic managed, in order to prioritise a first type of traffic over a second type of traffic.

11. Method of re-configuring the usage of hardware module units of a controller entity according to claim 10, wherein the different types of traffic are defined in dependence upon at least one of the following parameters:
Traffic Class;
Allocation Retention Priority (ARP); and
Traffic Handling Priority (THP).

12. Method of re-configuring the usage of hardware module units of a controller entity according to any of claims 9 to 11, wherein the measuring of performance of the hardware module unit includes checking its processing load is above a pre-established threshold for identifying that congestion state is close to be reached.

13. Method of re-configuring the usage of hardware module units of a controller entity according to any of claims 9 to 12, wherein the measuring of performance of the hardware module unit includes checking its processing load is below a pre-established threshold for identifying an under-used state.

14. Method of re-configuring the usage of hardware module units of a controller entity according to any of claims 9 to 13, wherein the measuring of performance of the hardware module unit includes evaluating the load of a specific type of traffic managed by the said hardware module unit in order to enable over-used applications to be suitably re-distributed.

15. Method of re-configuring the usage of the hardware module units of a controller entity according to any of claims 9 to 14, further comprising:
measuring the Quality of Service, QoS, associated to connections managed by each hardware module unit; and
identifying priority traffic to be suitably scheduled and managed.

16. Method of re-configuring the usage of the hardware module units of a controller entity according to any of claims 9 to 15, wherein the measuring of reliability includes testing failure of the hardware module units to force a re-assignation of resources.

17. Method of re-configuring the usage of the units of a controller entity according to any of claims 9 to 16, wherein the hardware module unit is selected from:
a subrack mountable equipment of a server; and
a board for being inserted in a subrack mountable equipment of a server.

## Patentansprüche

1. Controller-Entität (4) zum Verwalten von Basisstationen von wenigstens einer ersten Funkzugriffstechnologie und einer zweiten Funkzugriffstechnologie, die Folgendes umfasst:
eine gemeinsame Sendeschnittstelleneinheit zum Senden zu/Empfangen von einer Basisstation der ersten Funkzugriffstechnologie und einer Basisstation der zweiten Funkzugriffstechnologie;
mehrere Hardware-Moduleinheiten, die jeweils einen Betriebsmodus haben, der selektiv die jeweilige Hardware-Moduleinheit zum Dedizieren zu einer oder beiden aus erster und zweiter Funkzugangstechnologie konfiguriert ist; und
ein Zuordnungsmodul zum Einrichten des Betriebsmodus, der eine Dedizierungskonfiguration von wenigstens einer der Hardware-Moduleinheiten in Abhängigkeit von einer Messung der Leistung oder Zuverlässigkeit der genannten Hardware-Moduleinheiten für jede der Funkzugriffstechnologien definiert.

2. Controller-Entität nach Anspruch 1, **dadurch gekennzeichnet, dass** der Betriebsmodus von Hardware-Moduleinheiten ausgewählt ist aus:
exklusiver Dedizierung zur ersten Funkzugriffstechnologie;
exklusiver Dedizierung zur zweiten Funkzugriffstechnologie; und
gleichzeitiger Dedizierung zur ersten und zur zweiten Funkzugriffstechnologie.

3. Controller-Entität nach Anspruch 1 oder 2, wobei der Betriebsmodus von Hardware-Moduleinheiten in Abhängigkeit von der Last und von dem von jeder Funkzugriffstechnologie verwalteten Verkehrstyp eingerichtet wird, um einen ersten Verkehrstyp gegenüber einem zweiten Verkehrstyp zu priorisieren.

4. Controller-Entität nach Anspruch 3, wobei die verschiedenen Verkehrstypen in Abhängigkeit von wenigstens einem der folgenden Parameter definiert werden:
Verkehrsklasse;
ARP (Allocation Retention Priority); und
THP (Traffic Handling Priority).

5. Controller-Entität nach einem der vorherigen Ansprüche, **dadurch gekennzeichnet, dass** wenigstens eine Hardware-Moduleinheit ein Baugruppenträgermontierbares Ausrüstungsteil eines Servers ist.

6. Controller-Entität nach einem der vorherigen Ansprüche, **dadurch gekennzeichnet, dass** wenigstens eine Hardware-Moduleinheit eine Platine zum Einschieben in ein Baugruppenträger-montierbares Ausrüstungsteil eines Servers ist.

7. Controller-Entität nach einem der vorherigen Ansprüche, die ferner ein gemeinsames Radio-Resource-Managementmodul zum Durchführen einer Inter-Funkzugriffstechnologie-Übergabe auf der Basis der Last jeder Funkzugriffstechnologie und der Messung der Leistung und Zuverlässigkeit von Hardware-Moduleinheiten umfasst.

8. Controller-Entität nach einem der vorherigen Ansprüche, die ferner ein gemeinsames Betriebsunterstützungssystem (14) zum Überwachen und Konfigurieren von Parametern, Verwalten von Leistungsmessungen, Erkennen von Fehlern und Erzeugen von Alarmen für eine erste und eine zweite Funkzugriffstechnologie umfasst.

9. Verfahren zum Umkonfigurieren des Gebrauchs von Hardware-Moduleinheiten einer Controller-Entität (4) zum Verwalten von Basisstationen von wenigstens einer ersten Funkzugriffstechnologie und einer zweiten Funkzugriffstechnologie, wobei das Verfahren die folgenden Schritte beinhaltet:
Messen der Leistung und Zuverlässigkeit der Hardware-Moduleinheiten für die erste und die zweite Funkzugriffstechnologie;
Identifizieren von wenigstens einer der Hardware-Moduleinheiten als umzukonfigurierende Ziele; und
Umkonfigurieren, in Abhängigkeit von der Messung der Leistung und Zuverlässigkeit, des Gebrauchs der identifizierten wenigstens einen Hardware-Moduleinheit durch Zuordnen ihrer Dedizierung zu einer oder beiden aus erster und zweiter Funkzugriffstechnologie, um es zu ermöglichen, dass beide Funkzugriffstechnologien Ressourcen gemeinsam nutzen.

10. Verfahren zum Umkonfigurieren des Gebrauchs von Hardware-Moduleinheiten einer Controller-Entität nach Anspruch 9, wobei das Messen von Leistung und Zuverlässigkeit ferner Folgendes beinhaltet:
Beurteilen, für jede Funkzugriffstechnologie und für jede Hardware-Moduleinheit, des Typs und der Last von verwaltetem Verkehr, um einen ersten Verkehrstyp gegenüber einem zweiten Verkehrstyp zu priorisieren.

11. Verfahren zum Umkonfigurieren des Gebrauchs von Hardware-Moduleinheiten einer Controller-Entität nach Anspruch 10, wobei die verschiedenen Verkehrstypen in Abhängigkeit von wenigstens einem der folgenden Parameter definiert werden:
Verkehrsklasse;
ARP (Allocation Retention Priority); und
THP (Traffic Handling Priority).

12. Verfahren zum Umkonfigurieren des Gebrauchs von Hardware-Moduleinheiten einer Controller-Entität nach einem der Ansprüche 9 bis 11, wobei das Messen von Leistung der Hardware-Moduleinheit das Prüfen beinhaltet, ob ihre Verarbeitungslast über einer vorbestimmten Schwelle liegt, um zu identifizieren, dass das Erreichen eines Überfüllungszustands bevorsteht.

13. Verfahren zum Umkonfigurieren des Gebrauchs von Hardware-Moduleinheiten einer Controller-Entität nach einem der Ansprüche 9 bis 12, wobei das Messen von Leistung der Hardware-Moduleinheit das Prüfen beinhaltet, dass ihre Verarbeitungslast unter einer vorbestimmten Schwelle liegt, um einen unterbenutzten Zustand zu identifizieren.

14. Verfahren zum Umkonfigurieren des Gebrauchs von Hardware-Moduleinheiten einer Controller-Entität nach einem der Ansprüche 9 bis 13, wobei das Messen von Leistung der Hardware-Moduleinheit das Beurteilen der Last eines spezifischen Verkehrstyps beinhaltet, der von der genannten Hardware-Moduleinheit verwaltet wird, um es zu ermöglichen, dass überbenutzte Anwendungen auf geeignete Weise umverteilt werden.

15. Verfahren zum Umkonfigurieren des Gebrauchs der Hardware-Moduleinheiten einer Controller-Entität nach einem der Ansprüche 9 bis 14, das ferner Folgendes beinhaltet:
Messen der Dienstequalität QoS, die mit Verbindungen assoziiert ist, die von jeder Hardware-Moduleinheit verwaltet werden; und
Identifizieren von Prioritätsverkehr, der auf geeignete Weise zu planen und zu verwalten ist.

16. Verfahren zum Umkonfigurieren des Gebrauchs der Hardware-Moduleinheiten einer Controller-Entität nach einem der Ansprüche 9 bis 15, wobei das Messen von Zuverlässigkeit das Testen des Ausfalls der Hardware-Moduleinheiten beinhaltet, um eine Neuzuordnung von Ressourcen zu erzwingen.

17. Verfahren zum Umkonfigurieren des Gebrauchs der Einheiten einer Controller-Entität nach einem der Ansprüche 9 bis 16, wobei die Hardware-Moduleinheit ausgewählt ist aus:
einem Baugruppenträger-montierbaren Ausrüstungsteil eines Servers; und
einer Platine zum Einführen in ein Baugruppenträger-montierbares Ausrüstungsteil eines Servers.

## Revendications

1. Entité de contrôleur (4) pour gérer des stations de base d'au moins une première technologie d'accès radio et d'une deuxième technologie d'accès radio, comprenant :
une unité d'interface de transmission commune pour assurer des transmissions vers/des réceptions à partir d'une station de base de la première technologie d'accès radio et d'une station de base de la deuxième technologie d'accès radio ;
une pluralité d'unités de module matérielles, dont chacune a un mode de fonctionnement qui configure sélectivement l'unité de module matérielle respective pour être réservée à l'une des première et deuxième technologies d'accès radio, ou aux deux ; et
un module d'attribution pour établir le mode de fonctionnement qui définit une configuration de réservation d'au moins une des unités de module matérielles en dépendance d'une mesure de la performance et de la fiabilité desdites unités de module matérielles pour chacune des technologies d'accès radio.

2. Entité de contrôleur selon la revendication 1, **caractérisée en ce que** le mode de fonctionnement des unités de module matérielles est sélectionné parmi les suivants :
réservation exclusive à la première technologie d'accès radio ;
réservation exclusive à la deuxième technologie d'accès radio ; et
réservation simultanée aux première et deuxième technologies d'accès radio.

3. Entité de contrôleur selon la revendication 1 ou 2, le mode de fonctionnement des unités de module matérielles étant établi en dépendance de la charge et du type de trafic gérés par chaque technologie d'accès radio afin de donner priorité à un premier type de trafic plutôt qu'à un deuxième type de trafic.

4. Entité de contrôleur selon la revendication 3, les différents types de trafic étant définis en dépendance d'au moins un des paramètres suivants :
Traffic Class (classe de trafic) ;
Allocation Retention Priority (ARP) (priorité d'allocation / rétention) ; et
Traffic Handling Priority (THP) (priorité d'acheminement du trafic).

5. Entité de contrôleur selon l'une quelconque des revendications précédentes, **caractérisée en ce qu'**au moins une unité de module matérielle est un équipement apte à être monté dans un sous-bâti d'un serveur.

6. Entité de contrôleur selon l'une quelconque des revendications précédentes, **caractérisée en ce qu'**au moins une unité de module matérielle est une carte destinée à être insérée dans un équipement apte à être monté dans un sous-bâti d'un serveur.

7. Entité de contrôleur selon l'une quelconque des revendications précédentes, comprenant en outre un module de gestion de ressources radio commun pour effectuer un transfert inter-technologies d'accès radio, sur la base de la charge de chaque technologie d'accès radio et de la mesure de la performance et de la fiabilité des unités de module matérielles.

8. Entité de contrôleur selon l'une quelconque des revendications précédentes, comprenant en outre un système de support de fonctionnement commun (14) pour surveiller et configurer des paramètres, gérer des mesures de performance, détecter des défauts et produire des alarmes pour une première et une deuxième technologies d'accès radio.

9. Procédé de reconfiguration de l'usage d'unités de module matérielles d'une entité de contrôleur (4) pour gérer des stations de base d'au moins une première technologie d'accès radio et d'une deuxième technologie d'accès radio, le procédé comprenant les étapes suivantes consistant à :
mesurer la performance et la fiabilité des unités de module matérielles pour les première et deuxième technologies d'accès radio ;
identifier au moins l'une des unités de module matérielles en tant que cible(s) destinée(s) à être reconfigurée(s) ; et
reconfigurer, en dépendance de la mesure de la performance et de la fiabilité, l'usage de l'au moins une unité de module matérielle identifiée en attribuant sa réservation à l'une des première et deuxième technologies d'accès radio, ou aux deux, afin de permettre aux deux technologies d'accès radio de partager des ressources.

10. Procédé de reconfiguration de l'usage d'unités de module matérielles d'une entité de contrôleur selon la revendication 9, la mesure de la performance et de la fiabilité comprenant en outre l'opération consistant à :
évaluer, pour chaque technologie d'accès radio et pour chaque unité de module matérielle, le type et la charge de trafic gérés afin de donner priorité à un premier type de trafic plutôt qu'à un deuxième type de trafic.

11. Procédé de reconfiguration de l'usage d'unités de module matérielles d'une entité de contrôleur selon la revendication 10, les différents types de trafic étant définis en dépendance d'au moins un des paramètres suivants :
Traffic Class (classe de trafic) ;
Allocation Retention Priority (ARP) (priorité d'allocation / rétention) ; et
Traffic Handling Priority (THP) (priorité d'acheminement du trafic).

12. Procédé de reconfiguration de l'usage d'unités de module matérielles d'une entité de contrôleur selon l'une quelconque des revendications 9 à 11, la mesure de la performance de l'unité de module matérielle incluant l'opération consistant à vérifier que sa charge de traitement se situe au-dessus d'un seuil pré-établi pour identifier le fait que l'état de congestion est proche d'être atteint.

13. Procédé de reconfiguration de l'usage d'unités de module matérielles d'une entité de contrôleur selon l'une quelconque des revendications 9 à 12, la mesure de la performance de l'unité de module matérielle incluant l'opération consistant à vérifier que sa charge de traitement se situe en dessous d'un seuil pré-établi pour identifier un état sous-utilisé.

14. Procédé de reconfiguration de l'usage d'unités de module matérielles d'une entité de contrôleur selon l'une quelconque des revendications 9 à 13, la mesure de la performance de l'unité de module matérielle incluant l'évaluation de la charge d'un type spécifique de trafic géré par ladite unité de module matérielle afin de permettre une re-distribution appropriée des applications sur-utilisées.

15. Procédé de reconfiguration de l'usage des unités de module matérielles d'une entité de contrôleur selon l'une quelconque des revendications 9 à 14, comprenant en outre les opérations consistant à :
mesurer la qualité de service, QoS, associée à des connexions gérées par chaque unité de module matérielle ; et
identifier la priorité du trafic pour qu'elle soit ordonnancée et gérée de façon appropriée.

16. Procédé de reconfiguration de l'usage des unités de module matérielles d'une entité de contrôleur selon l'une quelconque des revendications 9 à 15, la mesure de la fiabilité incluant l'opération consistant à tester les pannes des unités de module matérielles afin de forcer une ré-attribution de ressources.

17. Procédé de reconfiguration de l'usage des unités d'une entité de contrôleur selon l'une quelconque des revendications 9 à 16, l'unité de module matérielle étant sélectionnée parmi :
un équipement apte à être monté dans un sous-bâti d'un serveur ; et
une carte destinée à être insérée dans un équipement apte à être monté dans un sous-bâti d'un serveur.
